# EUROPÄISCHE PATENTANMELDUNG

(11) **EP 2 912 941 A1**
(43) Veröffentlichungstag der Anmeldung: **02.09.2015**
(21) Anmeldenummer: 15152179.6
(22) Anmeldetag: 22.01.2015
(51) Int. Cl.: A01K 5/00

(54) **Vorrichtung zur Abtrennung von Futter oder Einstreu**

(30) Priorität: 27.02.2014 AT 872014 U
(71) Anmelder: Wasserbauer GmbH, 4595 Waldneukirchen (AT)
(72) Erfinder: Wasserbauer, Franz, 4595 Waldneukirchen (AT)
(74) Vertreter: KLIMENT & HENHAPEL

(57) **Zusammenfassung**

Vorrichtung zur Abtrennung von Futter- oder Einstreumaterial von einem als Stück- oder Schüttgut vorliegenden Vorratsmaterial umfassend ein Gehäuse (1), das einen Aufnahmeraum für das Vorratsmaterial bildet und eine Zuführöffnung (2) für das Vorratsmaterial und einen Abgabebereich für abgetrenntes Futter- oder Einstreumaterial aufweist, sowie zumindest eine rotierende Walze (3a, 3b) mit auf der Mantelfläche der Walze (3a, 3b) angeordneten Schneidelementen (6), und eine Fördereinrichtung (5) zur Förderung des Vorratsmaterials gegen die zumindest eine Walze (3a, 3b), wobei die zumindest eine Walze (3a, 3b) einen dem Aufnahmeraum zugewandten Umfangsbereich, sowie einen dem Abgabebereich zugewandten Umfangsbereich aufweist. Erfindungsgemäß wird vorgeschlagen, dass in dem dem Abgabebereich zugewandten Umfangsbereich der zumindest einen Walze ein konzentrisch zur jeweiligen Walze gebogenes Siebgitter angeordnet ist. Die Erfindung verbessert die Güte des abgetrennten Futter- oder Einstreumaterials hinsichtlich der Faserlänge des Futter- oder Einstreumaterials.

## Beschreibung

Die Erfindung betrifft eine Vorrichtung zur Abtrennung von Futter- oder Einstreumaterial von einem als Stück- oder Schüttgut vorliegenden Vorratsmaterial umfassend ein Gehäuse, das einen Aufnahmeraum für das Vorratsmaterial bildet und eine Zuführöffnung für das Vorratsmaterial und einen Abgabebereich für abgetrenntes Futter- oder Einstreumaterial aufweist, sowie zumindest eine rotierende Walze mit auf der Mantelfläche der Walze angeordneten Schneidelementen, und eine Fördereinrichtung zur Förderung des Vorratsmaterials gegen die zumindest eine Walze, wobei die zumindest eine Walze einen dem Aufnahmeraum zugewandten Umfangsbereich, sowie einen dem Abgabebereich zugewandten Umfangsbereich aufweist, gemäß dem Oberbegriff von Anspruch 1.

Futtermaterial kann zur Bevorratung entweder als Stückgut vorliegen, etwa in Form von Silageballen oder in Form gepresster oder gewickelter Ballen aus Stroh oder Heu, oder als Schüttgut, etwa in Form von losem Heu oder Stroh. Als Einstreumaterial wird in der Regel Heu oder Stroh verwendet, das ebenfalls als Stückgut in Form gepresster oder gewickelter Ballen, oder als loses Schüttgut vorliegen kann. Bei einer Bevorratung von Futter- oder Einstreumaterial als Stückgut in Form verdichteter Ballen müssen die Ballen bei Bedarf an Futter- oder Einstreumaterial entweder zerkleinert werden, oder es muss in gattungsgemäßen Vorrichtungen eine gewünschte Menge an Futter- oder Einstreumaterial vom Ballen dosiert abgetrennt werden. Auch bei einer Bevorratung von Futter- oder Einstreumaterial als Schüttgut muss bei Bedarf eine gewünschte Menge an Futter- oder Einstreumaterial von einer vorrätigen Schüttung abgetrennt werden.

Das Abtrennen von Futter- oder Einstreumaterial und dessen Verteilung über Verteileinrichtungen wie etwa Förderbänder, Verteilroboter, Verteilwägen und dergleichen wird zumeist automatisiert vorgenommen. Moderne Fütterungsvorrichtungen verfügen etwa über programmierbare Steuerungen, bei denen gewünschte Futtermittelzusammensetzungen, Futterzeiten und Futtermengen eingegeben werden können. Bei Bedarf setzt die Steuerung die Walzen sowie die Fördereinrichtung in Gang, sodass etwa Silage von einem Silageballen abgetrennt wird. Dabei können auch mehrere gattungsgemäße Vorrichtungen nebeneinander angeordnet werden, in denen Ballen von unterschiedlichem Silagematerial oder auch Schüttgut aus Heu oder Stroh bearbeitet werden. Das abgetrennte Material kann in weiterer Folge einem Mischer zugeführt werden, in dem das abgetrennte Futtermaterial vermengt und gewogen wird. Bei Erreichen einer gewünschten Futtermittelmenge werden die Walzen und Fördereinrichtungen sowie der Mischvorgang gestoppt und die Futtermittelmischung an den Ort der Futtervorlage transportiert. Auf diese Weise kann jedwede Futtermittelmischung in gewünschter Menge und Zusammensetzung automatisiert hergestellt werden. Auch die Abtrennung von Einstreu und deren Verteilung im Bodenbereich einer Stallung wird zumeist automatisiert vorgenommen.

Mit herkömmlichen Vorrichtungen gelingt es jedoch nicht, die Güte des abgetrennten Materials hinsichtlich der Faserlänge des Futter- oder Einstreumaterials zu kontrollieren. Die praktische Erfahrung in der Nutztierhaltung zeigt, dass kurzfaseriges Material in der Futteraufnahme oder als Einstreu vom Vieh bevorzugt wird. Zwar wird mitunter das Rührwerk in den oben erwähnten Mischern mit Schneiden versehen, um ein Kürzen der Faserlängen zu erreichen, allerdings ermöglicht diese Vorgangsweise keine Kontrolle über die tatsächlich erzielte Güte des abgetrennten Materials. Zudem werden die Mischzeiten erhöht und der gesamte Aufbereitungsprozess für eine gewünschte Futtermittelzusammensetzung oder Einstreu verzögert.

Es ist somit das Ziel der Erfindung die Güte des abgetrennten Futter- oder Einstreumaterials hinsichtlich der Faserlänge des Futter- oder Einstreumaterials zu verbessern und insbesondere eine verbesserte Zerkleinerung und höhere Feinheit des Futter- oder Einstreumaterials sicher zu stellen. Dabei soll auch eine Kontrolle der Faserlänge des abgetrennte Futter- oder Einstreumaterials möglich sein.

Diese Ziele werden durch die Merkmale von Anspruch 1 erreicht. Anspruch 1 bezieht sich auf eine Vorrichtung zur Abtrennung von Futter- oder Einstreumaterial von einem als Stück- oder Schüttgut vorliegenden Vorratsmaterial umfassend ein Gehäuse, das einen Aufnahmeraum für das Vorratsmaterial bildet und eine Zuführöffnung für das Vorratsmaterial und einen Abgabebereich für abgetrenntes Futter- oder Einstreumaterial aufweist, sowie zumindest eine rotierende Walze mit auf der Mantelfläche der Walze angeordneten Schneidelementen, und eine Fördereinrichtung zur Förderung des Vorratsmaterials gegen die zumindest eine Walze, wobei die zumindest eine Walze einen dem Aufnahmeraum zugewandten Umfangsbereich, sowie einen dem Abgabebereich zugewandten Umfangsbereich aufweist. Hierbei wird erfindungsgemäß vorgeschlagen, dass in dem dem Abgabebereich zugewandten Umfangsbereich der zumindest einen Walze ein konzentrisch zur jeweiligen Walze gebogenes Siebgitter angeordnet ist. Die Anordnung eines Siebgitters stellt eine konstruktiv einfache aber wirkungsvolle Maßnahme zur Kontrolle der Güte des abgetrennten Materials hinsichtlich seiner Faserlänge dar. Die Maschenweite des Siebgitters kann nach Bedarf gewählt werden und liegt in der Größenordnung weniger Quadratzentimeter. Wesentlich ist jedoch die konzentrisch gebogene Anordnung des Siebgitters, um es im Umfangsbereich nahe der rotierenden Walze anordnen zu können. Da sich im Abgabebereich der Walze das abgetrennte Futter- oder Einstreumaterial von der Walze löst, wird das abgetrennte Material aufgrund der erfindungsgemäßen Anordnung des Siebgitters von der Walze gegen das Siebgitter geschleudert bzw. gepresst und erhöht auf diese Weise den Durchsatz von abgetrenntem Material passender Güte, also hinreichend kleiner Faserlänge, durch das Siebgitter. Andererseits wirkt das Siebgitter aber auch als Rückhalteelement, um den Austrag von abgetrenntem Material unzureichender Güte, also mit zu großer Faserlänge, zu unterbinden.

Das konzentrisch zum abgabeseitigen Mantelflächenabschnitt der jeweiligen Walze angeordnete Siebgitter ist jeweils gebogen ausgeführt und folgt in seiner Krümmung der Krümmung der Mantelfläche der jeweiligen Walze. Sind etwa zwei Walzen vorgesehen, so wird für jede Walze ein in entsprechender Weise geformtes Siebgitter angeordnet. Freilich umgibt das jeweilige Siebgitter die entsprechende Walze nicht zur Gänze, sondern erstreckt sich lediglich über einen begrenzten, in den Abgabebereich orientierten Winkelbereich der Walze. Das Siebgitter ist dabei am Gehäuse vorzugsweise stationär, also unbewegt, angeordnet.

Hinsichtlich des Siebgitters wird ferner vorgeschlagen, dass am Siebgitter mehrere konzentrisch zur jeweiligen Walze und parallel zueinander verlaufende Gegenschneidebögen angeordnet sind, die jeweils Gegenschneidesegmente aufweisen. Die Gegenschneidebögen wirken dabei mit den Schneidelementen der Walzen zusammen und verbessern die Schneidwirkung und somit die Feinheit des abgetrennten und zerkleinerten Materials. Auf diese Weise werden die Walzen nicht nur zur Abtrennung von Futter- oder Einstreumaterial vom Stück- oder Schüttgut verwendet, sondern auch zur verbesserten Zerkleinerung des abgetrennten Materials.

Hinsichtlich der Walzen wird vorgeschlagen, dass zwei Walzen mit parallelen Rotationsachsen stationär am Gehäuse angeordnet sind, und die Fördereinrichtung das Vorratsmaterial in eine zu den Walzen orientierte Förderrichtung bewegt, wobei die Rotationsachsen der Walzen senkrecht zur Förderrichtung verlaufen. Die Fördereinrichtung kann etwa in Form von Transportbändern- oder ketten ausgeführt sein, auf denen das Stück- oder Schüttgut aufliegt und somit von der Zuführöffnung in Richtung der Walzen bewegt wird. Sobald Schüttgut in Anlage mit den Walzen gerät, wird Futter-oder Einstreumaterial von den Walzen vom Schüttgut abgetrennt und aufgrund der Rotation der Walzen in Richtung des Abgabebereiches transportiert. Liegt das Vorratsmaterial in Form von Stückgut vor, erzeugt die Fördereinrichtung bei Anlage des Stückguts an den Walzen auch jenen Anpressdruck, der zur Abtrennung von Futter- oder Einstreumaterial vom Ballen erforderlich ist. Diese Ausführung hat in beiden Fällen den Vorteil, dass die rotierenden Walzen nicht translatorisch bewegt werden müssen, sondern die Fördereinrichtung die für die Abtrennung erforderliche Relativbewegung des Vorratsmaterials zu den Walzen sicherstellt. Auf diese Weise kann auch das Siebgitter stationär befestigt werden und muss nicht bewegt werden, was die konstruktive Ausführung erleichtert.

Im Falle der Anordnung zweier Walzen wird ferner vorgeschlagen, dass die Rotationsachse einer ersten Walze unterhalb der Rotationsachse der zweiten Walze sowie in Förderrichtung versetzt angeordnet ist, also näher zum Abgabebereich liegt als die Rotationsachse der zweiten, also oberen Walze. Diese Ausführung verfügt über den Vorteil, dass abgetrenntes Material, das von der oberen Walze abgetrennt wurde, auf die untere Walze fällt und von ihr erneut zerschnitten und gegen das Siebgitter geschleudert bzw. gepresst wird. Auf diese Weise kann die Ansammlung von abgetrenntem Material auf der den Walzen zugewandten Seite des Siebgitters minimiert und der Materialdurchsatz durch das Siebgitter erhöht werden.

Um den Materialdurchsatz durch das Siebgitter zusätzlich zu erhöhen wird des Weiteren vorgeschlagen, dass am Gehäuse ein Träger mit senkrecht zu einer Längsachse des Trägers abstehenden Gegenschneiden befestigt ist, wobei die Längsachse des Trägers zwischen den Rotationsachsen der beiden Walzen und parallel zu ihnen verläuft. Auf diese Weise kann die Zerkleinerung des abgetrennten Materials stark verbessert werden, da auch der aufgrund der notwendigen Beabstandung der Walzen sich einstellende Freiraum zwischen den beiden Walzen zur Bearbeitung des abgetrennten Materials genutzt werden kann. Je nach Beabstandung der Walzen kann dabei die Längsachse des Trägers relativ zur Rotationsachse der oberen Walze in Förderrichtung versetzt angeordnet sein.

Ferner ist es auch vorteilhaft, wenn es sich bei der Fördereinrichtung um eine in Abhängigkeit von der Stromaufnahme der Walzen und/oder der Fördereinrichtung regelbare Fördereinrichtung handelt. Falls sich etwa eine erhöhte Stromaufnahme der Walzen zeigt, kann auf eine erhöhte Belastung der Walzen entweder durch zu hohen Anpressdruck der Stückguts oder zu hohe Ansammlung von abgetrenntem Material auf der den Walzen zugewandten Seite des Siebgitters geschlossen werden, sodass in diesen Fällen eine Verringerung der Fördergeschwindigkeit durch entsprechende Ansteuerung der Fördereinrichtung vorgenommen werden kann. Auf diese Weise können Fehlfunktionen oder unzulässige Belastungen der Walzen oder des Siebgitters vermieden werden.

Des Weiteren ist es vorteilhaft, wenn zwischen dem Antriebsmotor und der jeweiligen Walze ein Übersetzungsgetriebe vorgesehen ist, das das Verhältnis der Rotationsgeschwindigkeiten der beiden Walzen fixiert. Insbesondere kann auf diese Weise auch vorgesehen sein, dass die untere Walze schneller rotiert als die obere Walze, da sich im Bereich der unteren Walze auch jenes Material ansammelt, das zwar von der oberen Walze abgetrennt wurde, aber vom Siebgitter zurückgehalten wurde und schwerkraftbedingt oder durch die Rotation der oberen Walze in den Bereich der unteren Walze fällt. Daher ist es vorteilhaft, wenn die untere Walze aufgrund höherer Rotationsgeschwindigkeit einen höheren Materialdurchsatz durch das Siebgitter erreicht als die obere Walze. Aufgrund des festgelegten Verhältnisses der Rotationsgeschwindigkeiten werden die unterschiedlichen Rotationsgeschwindigkeiten auch im Belastungsfall oder bei einer Nachregelung der Fördereinrichtung oder der Walzen beibehalten.

Die Erfindung wird in weiterer Folge anhand von Ausführungsbeispielen mithilfe der beiliegenden Figuren näher erläutert. Es zeigen dabei die
Fig. 1 eine perspektivische Darstellung einer Ausführungsform einer Vorrichtung zur Abtrennung von Futter- oder Einstreumaterial ohne Siebgitter,
Fig. 2 eine auswurfseitige Ansicht der Vorrichtung gemäß Fig. 1,
Fig. 3 eine perspektivische Ansicht einer Ausführungsform einer Vorrichtung mit Siebgitter und Abdeckblende für den mittig angeordneten Träger,
Fig. 4 eine Seitenansicht der Vorrichtung gemäß Fig. 3,
Fig. 5 eine perspektivische Detailansicht der Walzen und der Siebgitter,
Fig. 6 eine auswurfseitige Ansicht der Vorrichtung gemäß der Fig. 3 mit Siebgitter, aber ohne Abdeckblende des Trägers,
Fig. 7 die Vorrichtung gemäß der Fig. 3 mit Siebgitter von der Zuführöffnung aus gesehen,
Fig. 8 eine Detailansicht der Walzen und der Siebgitter von der Seite gesehen, und die
Fig. 9 eine perspektivische Detailansicht der unteren Walze und seines Siebgitters mit Gegenschneidebögen.

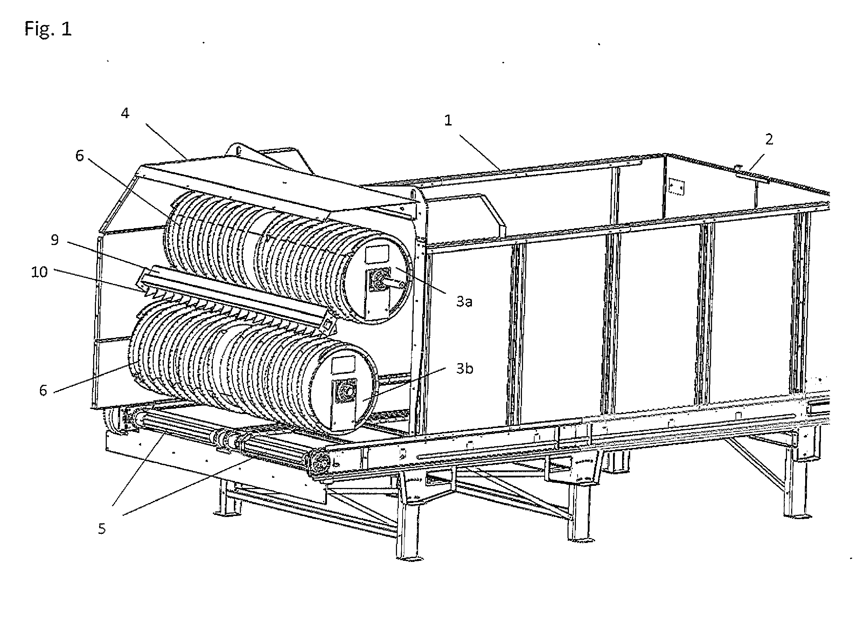

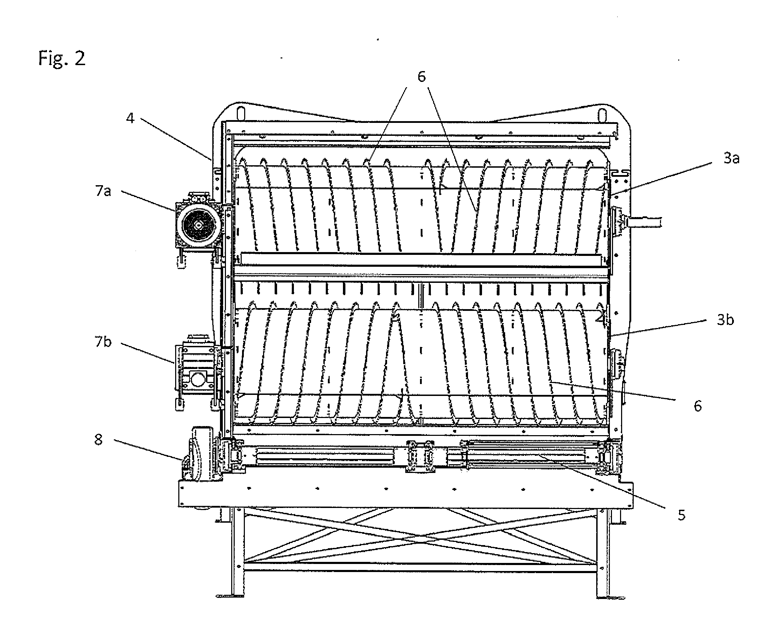

Zur Erläuterung der grundsätzlichen Funktionsweise der erfindungsgemäßen Vorrichtung wird zunächst auf die Fig. 1 Bezug genommen, die eine perspektivische Darstellung einer Ausführungsform einer Vorrichtung zur Abtrennung von Futter- oder Einstreumaterial von einem in Form von Ballen oder Schüttgut vorliegenden Vorrat zeigt. Das erfindungsgemäß vorgesehene Siebgitter wurde in den Fig. 1 und 2 noch nicht dargestellt, um eine bessere Sicht auf die Walzen zu bieten und deren Funktion zu erläutern. Die dargestellte Vorrichtung umfasst ein Gehäuse 1, das einen Aufnahmeraum für das Vorratsmaterial (in den Fig. 1-9 nicht dargestellt) bildet und eine Zuführöffnung 2 für das Vorratsmaterial aufweist. Die Zuführöffnung ist in der gezeigten Ausführungsform als verschließbare Tür ausgeführt und ermöglicht das Einbringen des als Stück- oder Schüttgut vorliegenden Vorratsmaterials in das Gehäuse 1.

Auf der der Zuführöffnung 2 gegenüber liegenden Seite des quaderförmig ausgeführten Gehäuses 1 sind zwei Walzen 3a, 3b mit horizontalen und zueinander parallelen Rotationsachsen stationär am Gehäuse 1 angeordnet. Das Gehäuse 1 verfügt hierfür über eine Einhausung 4 für die beiden Walzen 3a, 3b, die einen sich an den Aufnahmeraum anschließenden Abtrennraum des Gehäuses 1 bildet. In der Fig. 1 wurde die dem Betrachter zugewandte Seitenwand der Einhausung 4 sowie die Stirnwand der Einhausung 4 entfernt, um eine bessere Sicht auf die beiden Walzen 3a, 3b zu ermöglichen. Während des Betriebes der Vorrichtung umgibt die Einhausung 4 die Walzen 3a, 3b zur Gänze und lässt lediglich eine Auswurföffnung im unteren Bereich der Einhausung 4 frei.

Im Bodenbereich des Gehäuses 1 ist eine Fördereinrichtung 5 für das Vorratsmaterial angeordnet, die etwa in Form von Transportbändern oder -ketten ausgeführt sein kann, auf die das Vorratsmaterial aufgelegt wird. Die Fördereinrichtung 5 befördert das in Form von Ballen oder als Schüttung aufgelegte Vorratsmaterial von der Zuführöffnung 2 zu den beiden Walzen 3a, 3b, und somit in eine zu den Walzen 3a, 3b orientierte Förderrichtung. Da die Rotationsachsen der Walzen 3a, 3b senkrecht zur Förderrichtung verlaufen und den Bewegungsweg des Vorratsmaterials queren, erzeugt die Fördereinrichtung 5 in weiterer Folge die für die abtrennende Funktion der Walzen 3a, 3b erforderliche Anpressbewegung des Vorratsmaterials an die Walzen 3a,3b.

In der Fig. 1 ist ferner ersichtlich, dass die Rotationsachse der unteren Walze 3b relativ zur Rotationsachse der oberen Walze 3a in Förderrichtung versetzt angeordnet ist. Daher wird der Ballen oder das Schüttgut auf seinem Bewegungsweg entlang der zu den Walzen 3a, 3b orientierten Förderrichtung zuerst mit der oberen Walze 3a in Anlage geraten und von ihr bearbeitet werden. Von der oberen Walze 3a abgetrenntes Material fällt dabei auf die untere Walze 3b und wird von ihr erneut gefördert. Auf diesen Sachverhalt wird in weiterer Folge noch näher eingegangen werden.

Am Gehäuse 1 ist des Weiteren ein Träger 9 mit senkrecht zu einer Längsachse des Trägers 9 abstehenden Gegenschneiden 10 befestigt, wobei die Längsachse des Trägers 9 zwischen den Rotationsachsen der beiden Walzen 3a, 3b und parallel zu ihnen verläuft. Auf diese Weise wird auch der aufgrund der notwendigen Beabstandung der Walzen 3a, 3b sich einstellende Freiraum zwischen den beiden Walzen 3a, 3b zur Bearbeitung des abgetrennten Materials genutzt, sodass die Zerkleinerung des abgetrennten Materials stark verbessert werden kann. Je nach Beabstandung der Walzen 3a, 3b kann dabei die Längsachse des Trägers 9 relativ zur Rotationsachse der oberen Walze 3a in Förderrichtung versetzt angeordnet sein.

Die Walzen 3a, 3b sind für die Abtrennung von Futter- oder Einstreumaterial vom Ballen oder von der Schüttung jeweils mit auf der Mantelfläche der Walzen 3a, 3b angeordneten Schneidelementen 6 versehen. In der Ausführungsform gemäß der Fig. 1-9 sind die Schneidelemente 6 etwa als sich spiralförmig über die Mantelfläche erstreckende Schneiden ausgeführt, um auch eine bessere Mitnahme des Materials, insbesondere bei losem Schüttgut, zu ermöglichen. Die Walzen 3a, 3b werden dabei von Antriebsmotoren 7a, 7b in Rotation versetzt, die an der Außenseite der Einhausung 4 angeordnet sind, wie in der Fig. 2 ersichtlich ist. In der Fig. 2 ist ferner der Fördermotor 8 für die Fördereinrichtung 5 zu sehen, der ebenfalls an der Außenseite der Einhausung 4 angeordnet ist. Falls der Fördermotor 8 und die Antriebsmotoren 7a, 7b in Betrieb gesetzt werden und sich Vorratsmaterial auf der Fördereinrichtung 5 befindet, wird das Vorratsmaterial in Richtung der rotierenden Walzen 3a, 3b bewegt. Das Vorratsmaterial gerät schließlich in Anlage mit dem jeweiligen, dem Aufnahmeraum zugewandten Mantelflächenabschnitt der Walzen 3a, 3b, sodass die Schneidelemente 6 Material vom Ballen oder der Schüttung abtrennen. Im Zuge der Rotation der Walzen 3a, 3b wird das abgetrennte Material von den Walzen 3a, 3b in weiterer Folge zum Abgabebereich gefördert. Im Abgabebereich löst sich das abgetrennte Material von den Walzen 3a, 3b und fällt in Bezug auf die Fig. 1 und 2 nach unten ab, wo das abgetrennte Material das Gehäuse 1 über eine Auswurföffnung verlässt.

Nachdem das abgetrennte Material die Auswurföffnung des Gehäuses 1 verlassen hat, kann es etwa einem Mischer zugeführt werden, wo es mit anderem Futter- oder Einstreumaterial vermengt werden kann, oder es wird direkt an den Ort der Futtervorlage gebracht, oder als Einstreumaterial in den Stallungen verteilt. Es ist jedoch unmittelbar ersichtlich, dass ohne weitere Maßnahme bei einer Vorrichtung, wie sie in der Fig. 1 und 2 dargestellt ist, keine Kontrolle über die Feinheit des abgetrennten Materials besteht. Insbesondere wird Futter oder Einstreu auch in Klumpen oder als langfaseriges Material abgetrennt und abgegeben.

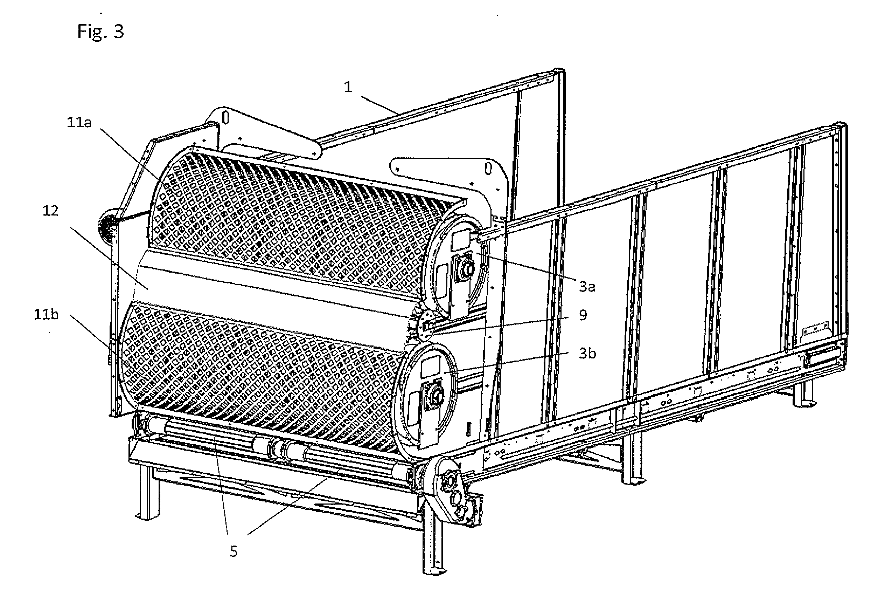

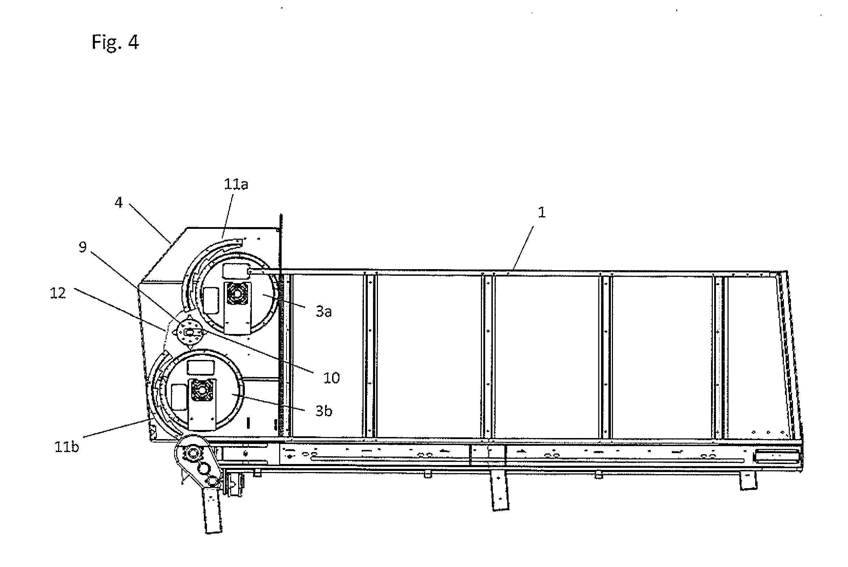

Daher ist erfindungsgemäß die Anordnung eines Siebgitters 11 vorgesehen, wie anhand der Fig. 3-9 erläutert wird. Die Fig. 3 zeigt eine zur Fig. 1 analoge Vorrichtung, bei der jedoch im Abgabebereich für jede der zumindest einen Walze 3a, 3b ein Siebgitter 11a, 11b vorgesehen ist, das konzentrisch zu jenem Mantelflächenabschnitt der jeweiligen Walze 3a, 3b angeordnet ist, der dem Abgabebereich zugewandt ist. Der mittig angeordnete Träger 9 ist ferner mit einer Abdeckblende 12 versehen. Die Siebgitter 11a**,** 11b und die Abdeckblende 12 sind an den Seitenwänden der Einhausung 4 des Gehäuses 1 befestigt, wobei in der Fig. 3 wiederum die dem Betrachter zugewandte Seitenwand der Einhausung 4 sowie die Stirnwand und die Deckwand der Einhausung 4 entfernt wurden, um eine bessere Sicht auf die beiden Siebgitter 11a, 11b zu ermöglichen. Die konzentrisch gebogene Ausführung der Siebgitter 11a**,** 11b ermöglicht im Abgabebereich deren Anordnung im Umfangsbereich nahe der rotierenden Walzen 3a, 3b, wie in der Fig. 4 ersichtlich ist. Im Abgabebereich der Walze 3a, 3b löst sich das abgetrennte Futter- oder Einstreumaterial von der Walze 3a, 3b und wird von der Walze 3a, 3b gegen das jeweilige Siebgitter 11a**,** 11b geschleudert bzw. gepresst. Auf diese Weise wird der Durchsatz von abgetrenntem Material passender Güte, also hinreichend kleiner Faserlänge, durch das Siebgitter 11a**,** 11b maximiert. Andererseits wirkt das Siebgitter 11a**,** 11b aber auch als Rückhalteelement, um den Austrag von abgetrenntem Material unzureichender Güte, also mit zu großer Faserlänge, zu unterbinden.

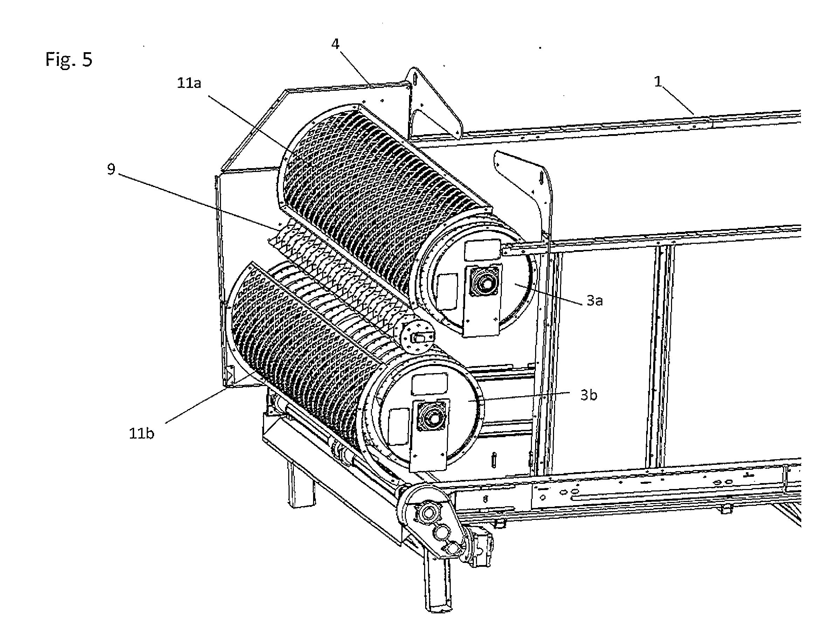

Die Fig. 5 zeigt eine perspektivische Detailansicht der Walzen 3a, 3b und der Siebgitter 11a**,** 11b, wobei die Abdeckblende 12 entfernt wurde. Die Walzen 3a, 3b rotieren dabei so, dass sich der jeweils dem Aufnahmeraum und somit dem Vorratsmaterial zugewandte Mantelflächenabschnitt der jeweiligen Walze 3a, 3b nach oben bewegt, also das abgetrennte Material nach oben fördert, und der jeweils dem Abgabebereich zugewandte Mantelflächenabschnitt nach unten bewegt. Bei der abwärts gerichteten Bewegung der jeweiligen Walze 3a, 3b löst sich das abgetrennte Material von der jeweiligen Walze 3a, 3b, das in weiterer Folge das jeweilige Siebgitter 11a, 11b queren muss, um zur Auswurföffnung zu gelangen. Je nach gewählter Maschengröße des Siebgitters 11a, 11b erfolgt dabei die Trennung eines ausgeworfenen Feinanteils von einem zurückgehaltenen Grobanteil. Das Siebgitter 11a**,** 11b erstreckt sich hierfür über einen begrenzten Winkelbereich, der in den Abgabebereich einer Walze 3a, 3b orientiert ist und den Abgabebereich der Walze 3a, 3b im Wesentlichen abdeckt.

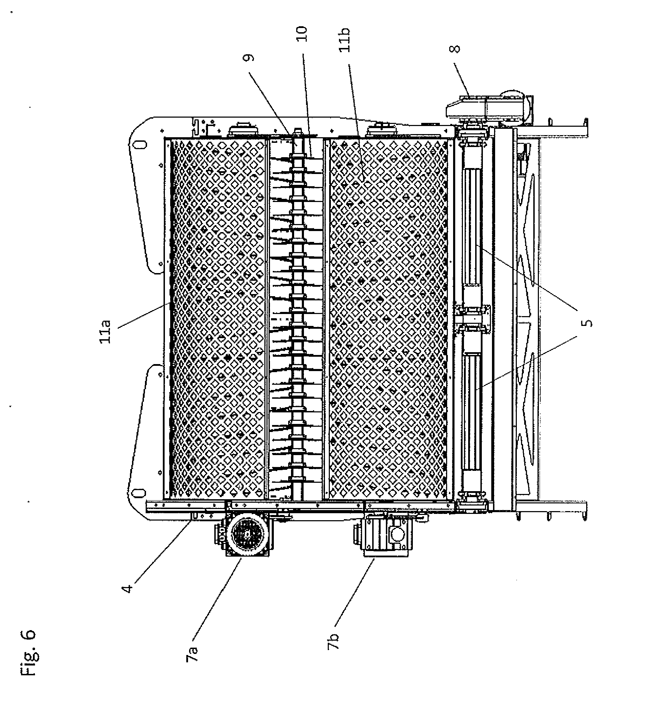

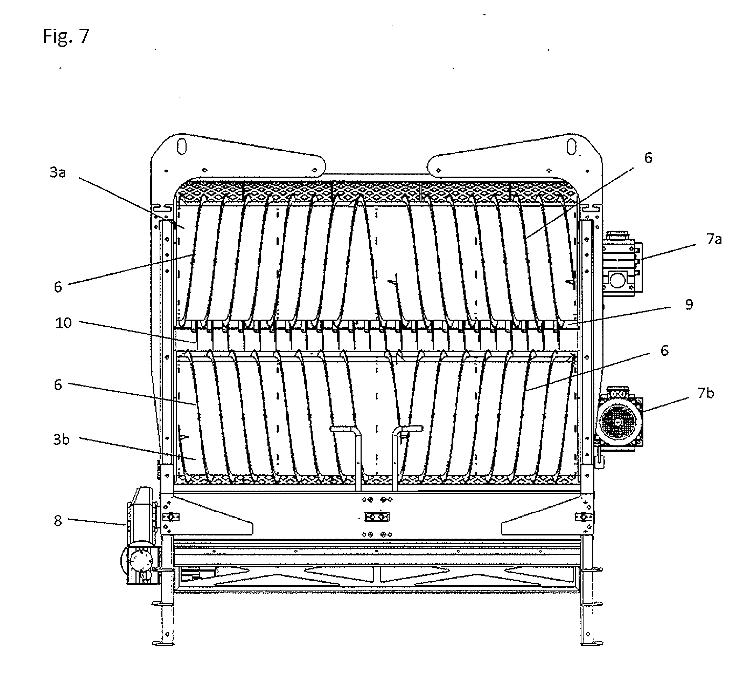

Die Fig. 6 zeigt eine auswurfseitige Ansicht der Vorrichtung gemäß der Fig. 3, also in Bezug auf die Fig. 3 von links gesehen mit Siebgitter 11a**,** 11b, aber ohne Abdeckblende 12 des Trägers 9. Ferner sind die Antriebsmotoren 7a, 7b ersichtlich, die an der Außenseite der Einhausung 4 angeordnet sind, sowie der Fördermotor 8 für die Fördereinrichtung 5, der ebenfalls an der Außenseite der Einhausung 4, jedoch auf der gegenüberliegenden Seite angeordnet ist. Die Fig. 7 zeigt die Vorrichtung gemäß der Fig. 3 mit Siebgitter 11a, 11b von der Zuführöffnung aus gesehen.

In den Fig. 5-7 ist ferner jeweils der mittig angeordnete Träger 9 ersichtlich, der die Zerkleinerung des abgetrennten Materials verbessert, da auch der aufgrund der notwendigen Beabstandung der Walzen 3a, 3b sich einstellende Freiraum zwischen den beiden Walzen 3a, 3b zur Bearbeitung des abgetrennten Materials genutzt wird. Die obere Walze 3a schiebt nämlich das abgetrennte Material im Zuge ihrer Rotation gegen die Gegenschneiden 10 des Trägers 9, wodurch eine weitere Zerkleinerung stattfindet. Das abgetrennte und zerkleinerte Material fällt schließlich auf die oberen Mantelflächenabschnitte der unteren Walze 3b, die das zerkleinerte Material im Zuge ihrer Rotation wiederum gegen die Gegenschneiden 10 des Trägers 9 schiebt, sodass eine zusätzliche Zerkleinerung stattfindet. Vorzugsweise sind hierfür die Rotationsgeschwindigkeiten der beiden Walzen 3a, 3b unterschiedlich. Insbesondere kann vorgesehen sein, dass die untere Walze 3b schneller rotiert als die obere Walze 3a, da sich im Bereich der unteren Walze 3b auch jenes Material ansammelt, das zwar von der oberen Walze 3a abgetrennt wurde, aber vom oberen Siebgitter 11a zurückgehalten wurde und schwerkraftbedingt oder durch die Rotation der oberen Walze 3a in den Bereich der unteren Walze 3b fällt. Daher ist es vorteilhaft, wenn die untere Walze 3b aufgrund höherer Rotationsgeschwindigkeit einen höheren Materialdurchsatz durch das untere Siebgitter 11b erreicht als die obere Walze 3a.

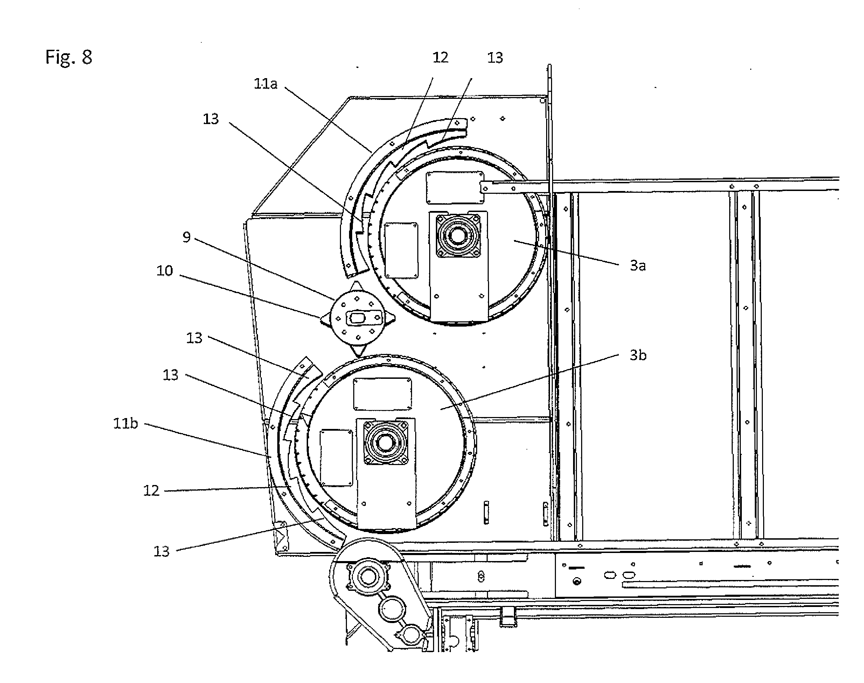

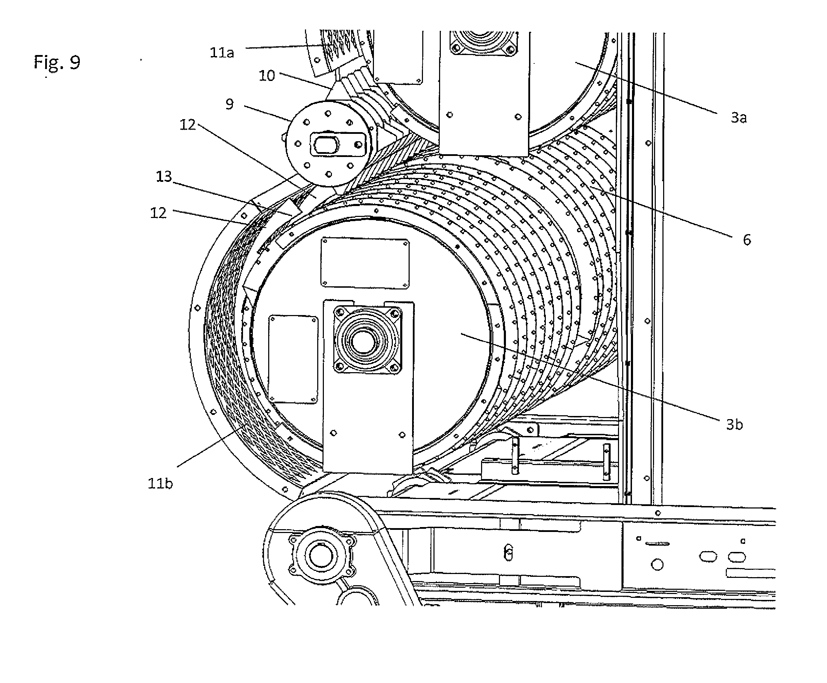

Der Träger 9 ist am Gehäuse 1 befestigt und weist in der gezeigten Ausführungsform vier Reihen von senkrecht zur Längsachse abstehenden Gegenschneiden 10 auf, die jeweils um 90° versetzt am Träger 9 angeordnet sind. Die reihenförmige Anordnung der Gegenschneiden 10 ist in den Fig. 5-7 gut ersichtlich, und die Anordnung von vier Reihen im Winkel von 90° zueinander ist in der Fig. 8 ersichtlich. Der Träger 9 ist stationär am Gehäuse 1 angeordnet, kann jedoch im Wartungsfall gelockert und um 90° verdreht werden, sodass zuvor stark belastete Gegenschneiden 10 eine Position einnehmen, in der sie weniger stark belastet werden, und stattdessen bislang weniger stark belastete Gegenschneiden 10 stärker belastet werden. In der Fig. 8 ist ferner ersichtlich, dass an den Siebgittern 11a**,** 11b jeweils mehrere konzentrisch zur jeweiligen Walze 3a, 3b und parallel zueinander verlaufende Gegenschneidebögen 12 angeordnet sind, die jeweils Gegenschneidesegmente 13 aufweisen. Im gezeigten Ausführungsbeispiel weist etwa jeder Gegenschneidebogen 12 insgesamt fünf Gegenschneidsegmente 13 auf, die freilich in Anzahl und Ausführung variieren können. Mehrere Gegenschneidebögen 12 sind parallel zueinander entlang der Längserstreckung des jeweiligen Siebgitters 11a**,** 11b angeordnet, wie etwa der Fig. 9 entnommen werden kann. Die Gegenschneidebögen 12 dienen somit auch der Versteifung der Siebgitter 11a**,** 11b über deren Längserstreckung, die insofern vorteilhaft ist, da die Siebgitter 11a**,** 11b im Betrieb stark belastet werden. Die Gegenschneidebögen 12 wirken dabei mit den Schneidelementen 6 der Walzen 3a, 3b zusammen und verbessern die Schneidwirkung und somit die Feinheit des abgetrennten und zerkleinerten Materials. Auf diese Weise werden die Walzen 3a, 3b nicht nur zur Abtrennung von Futter- oder Einstreumaterial vom Vorratsmaterial verwendet, sondern auch zur verbesserten Zerkleinerung des abgetrennten Materials.

Dennoch kann es zur Anhäufung von abgetrenntem Material zwischen den Walzen 3a, 3b und den Siebgittern 11a**,** 11b kommen, sodass es vorteilhaft ist, wenn die Fördereinrichtung 5 hinsichtlich der Förderbewegung des Vorratsmaterials an die Walzen 3a, 3b regelbar ist. Diese Regelung der Förderbewegung kann etwa mit der Stromaufnahme der Walzen 3a, 3b und/oder der Fördereinrichtung 5 vorgenommen werden. Falls sich eine erhöhte Stromaufnahme der Walzen 3a, 3b und/oder der Fördereinrichtung 5 zeigt, die etwa an den Frequenzumrichtern für die Antriebsmotoren 7 und den Fördermotor 8 gemessen werden kann, kann auf eine erhöhte Belastung der Walzen 3a, 3b entweder durch zu hohen Anpressdruck oder zu hohe Ansammlung von abgetrenntem Material auf der den Walzen 3a, 3b zugewandten Seite des Siebgitters 11a**,** 11b geschlossen werden, sodass in diesen Fällen eine Verringerung der Fördergeschwindigkeit durch entsprechende Ansteuerung der Fördereinrichtung 5 vorgenommen werden kann. Auf diese Weise können Fehlfunktionen oder unzulässige Belastungen der Walzen 3a, 3b oder der Siebgitter 11a, 11b vermieden werden.

Zwischen der jeweiligen Walze 3a, 3b und ihrem jeweiligen Antriebsmotor 7a, 7b kann ferner ein Übersetzungsgetriebe vorgesehen sein, das jeweils so ausgeführt ist, dass bei gleicher Ansteuerung der beiden Antriebsmotoren 7a, 7b ein bestimmtes Verhältnis der Rotationsgeschwindigkeiten der Walzen 3a, 3b festgelegt wird. Alternativ könnte auch ein einziger Antriebsmotor 7 für beide Walzen 3a, 3b vorgesehen sein, und das festgelegte Verhältnis der Rotationsgeschwindigkeiten über ein geeignetes Übersetzungsgetriebe fixiert werden. Auf diese Weise wird die Regelung der Walzen 3a, 3b und der Fördereinrichtung 5 vereinfacht.

Die Erfindung verbessert die Güte des abgetrennten Futter- oder Einstreumaterials hinsichtlich der Faserlänge des Futter- oder Einstreumaterials, da Material, das hinsichtlich mangelnder Feinheit oder zu großer Faserlängen unerwünscht ist, von den Siebgittern 11a**,** 11b zurückgehalten und weiteren Schneideprozessen durch die Walzen 3a, 3b, die Gegenschneiden 10 des Trägers 9 und der Gegenschneidebögen 12 der Siebgitter 11a**,** 11b zugeführt wird. Da das abgetrennte Material erst ab einer vorgegebenen Feinheit, die durch die Maschenweite der Siebgitter 11a**,** 11b vorgegeben ist, die Auswurföffnung verlässt, ist automatisch eine Kontrolle hinsichtlich der Güte des abgetrennten Materials gegeben.

## Patentansprüche

1. Vorrichtung zur Abtrennung von Futter- oder Einstreumaterial von einem als Stück- oder Schüttgut vorliegenden Vorratsmaterial umfassend ein Gehäuse (1), das einen Aufnahmeraum für das Vorratsmaterial bildet und eine Zuführöffnung (2) für das Vorratsmaterial und einen Abgabebereich für abgetrenntes Futter- oder Einstreumaterial aufweist, sowie zumindest eine rotierende Walze (3a, 3b) mit auf der Mantelfläche der Walze (3a, 3b) angeordneten Schneidelementen (6), und eine Fördereinrichtung (5) zur Förderung des Vorratsmaterials gegen die zumindest eine Walze (3a, 3b), wobei die zumindest eine Walze (3a, 3b) einen dem Aufnahmeraum zugewandten Umfangsbereich, sowie einen dem Abgabebereich zugewandten Umfangsbereich aufweist, **dadurch gekennzeichnet, dass** in dem dem Abgabebereich zugewandten Umfangsbereich der zumindest einen Walze ein konzentrisch zur jeweiligen Walze gebogenes Siebgitter angeordnet ist.

2. Vorrichtung nach Anspruch 1, **dadurch gekennzeichnet, dass** am Siebgitter (11a, 11b) mehrere konzentrisch zur jeweiligen Walze (3a, 3b) und parallel zueinander verlaufende Gegenschneidebögen (12) angeordnet sind, die jeweils Gegenschneidesegmente (13) aufweisen.

3. Vorrichtung nach Anspruch 1 oder 2, **dadurch gekennzeichnet, dass** zwei Walzen (3a, 3b) mit parallelen Rotationsachsen stationär am Gehäuse (1) angeordnet sind, und die Fördereinrichtung (5) das Vorratsmaterial in eine zu den Walzen (3a, 3b) orientierte Förderrichtung bewegt, wobei die Rotationsachsen der Walzen (3a, 3b) senkrecht zur Förderrichtung verlaufen.

4. Vorrichtung nach Anspruch 3, **dadurch gekennzeichnet, dass** die Rotationsachse einer ersten Walze (3b) unterhalb der Rotationsachse der zweiten Walze (3a) sowie in Förderrichtung versetzt angeordnet ist.

5. Vorrichtung nach Anspruch 3 oder 4, **dadurch gekennzeichnet, dass** am Gehäuse (1) ein Träger (9) mit senkrecht zu einer Längsachse des Trägers (9) abstehenden Gegenschneiden (10) befestigt ist, wobei die Längsachse des Trägers (9) zwischen den Rotationsachsen der beiden Walzen (3a, 3b) und parallel zu ihnen verläuft.

6. Vorrichtung nach einem der Ansprüche 1 bis 5, **dadurch gekennzeichnet, dass** es sich bei der Fördereinrichtung (5) um eine in Abhängigkeit von der Stromaufnahme der Walzen (3a, 3b) und/oder der Fördereinrichtung (5) regelbare Fördereinrichtung (5) handelt.

7. Vorrichtung nach einem der Ansprüche 1 bis 6, **dadurch gekennzeichnet, dass** zwischen der jeweiligen Walze (3a, 3b) und ihrem Antriebsmotor (7) ein Übersetzungsgetriebe vorgesehen ist, das das Verhältnis der Rotationsgeschwindigkeiten der Walzen (3a, 3b) fixiert.
